# EUROPEAN PATENT APPLICATION

(11) **EP 4 023 580 A1**
(43) Date of publication of application: **06.07.2022**
(21) Application number: 20857360.0
(22) Date of filing: 16.07.2020
(51) Int. Cl.: B65H 23/195, B65H 18/08, B65H 23/04, B65H 77/00

(54) **METHOD FOR MANUFACTURING ROLLS OF PRE-STRETCHED FILM AND MACHINE FOR CARRYING OUT SAME**

(30) Priority: 30.08.2019 RU 2019127582
(71) Applicant: Ivanov, Aleksandr Sergeevich, St.Petersburg 194156 (RU)
(72) Inventor: Ivanov, Aleksandr Sergeevich, St.Petersburg 194156 (RU)
(74) Representative: Patpol Kancelaria Patentowa Sp. z o.o.
(86) International application number: PCT/RU2020/050134
(87) International publication number: WO 2021/040567

(57) **Abstract**

The proposed group of inventions relates to the field of industry associated with rewinding of polymeric film out of big rolls to smaller ones. a method for producing rolls of pre-stretched film contains a stage of pre-stretching of the film by a pre-stretching unit of the film, comprising a group of rollers positioned in sequence and configured for the implementation of film pre-stretching, and a stage of film winding on a roll by a winding unit of the film on a roll, which contains a film winding roller and a winding idler of the film on a roll pressed against it, during the stage of winding of the film on a roll the winding idler of the film on a roll is pressed in a pulsed way against the film winding roller.

## Description

### Technical field

The proposed group of inventions relates to the field of industry associated with rewinding of polymeric film out of big rolls to smaller ones, suitable for wrapping different goods and loads, wherein pre-stretched polymeric film is used, and may be applied in manual and automated wrapping machines.

### Background

In the field of packaging materials there is a known product, which is a thin (6.7 µm) film stretched during the rewinding from one roll to another out of a film up to 23 µm thick made of high pressure polyethylene (HPP/LDPE), polyvinyl chloride (PVC) etc. Such product is called pre-stretched film, i.e., preliminarily stretched film.

There is a known method and a machine for producing rolls of pre-stretched extendable film [patent for the invention RU 2622429, published on 15.06.2017], the machine comprises a pre-stretching unit (10) of the film (F) and a winding unit (100) of the film on the roll, having a series of rollers, on which the advancing film is partially wound, the pre-stretching unit (10) comprises, at least, the first pre-stretching roller (12), an auxiliary pre-stretching roller (13) pressed against the first roller (12), with the film located therebetween, and the second pre-stretching roller (14), located in sequence, the latter has a speed greater than the speed of the first roller (12), for the implementation of film pre-stretching, the winding unit comprises a winding roller (104) for winding the pre-stretched film, the pre-stretching unit (10) further comprises a strain relief roller (17) located downstream of the second pre-stretching roller (14) and having a speed less than the speed of said second pre-stretching roller (14) and greater than the speed of said winding roller (104), for providing the first strain relief of the film after the pre-stretching operation and the second strain relief of the film before the winding operation. The winding roller (104) is in contact with the roll R of the winded film F, which is supported by the spool 105. Thus, the relief of film webs is provided by a sequential controlled reduction of drive roller rotational speed.

The main drawback of the known technical solution is a complexity of the method and the device implementing the method, as there are two grades of film relief, which, to be implemented, require a high amount of drive rollers with synchronous motors connected to them. At the same time, to provide speed difference of relief rolls in the rewinding process it is necessary to control their speed at every relief stage, which also leads to complication of the device control algorithm in general.

### Summary of the invention

A method for producing rolls of pre-stretched film contains a stage of pre-stretching of the film by a pre-stretching unit of the film, comprising a group of rollers positioned in sequence and configured for the implementation of film pre-stretching, and a stage of film winding on a roll by a winding unit of the film on a roll, which contains a film winding roller and a winding idler of the film on a roll pressed against it, during the stage of winding of the film on a roll the winding idler of the film on a roll is pressed in a pulsed way against the film winding roller.

A machine for producing rolls of pre-stretched film contains a pre-stretching unit of the film, comprising a group of rollers located in sequence configured for the implementation of film pre-stretching, and a winding unit of the film on a roll, which contains a film winding roller and a winding idler of the film on a roll pressed against it, the winding idler of the film on a roll is made with possibility of pulsed pressing against the film winding roller.

### Technical problem

A technical result of the claimed group of inventions is simplifying the method for manufacturing rolls of pre-stretched film and the design of the machine for carrying out the same.

### Solution of the problem

The claimed technical result in the part of the method is achieved due to the fact that the method for producing rolls of pre-stretched film contains a stage of pre-stretching of the film by a pre-stretching unit of the film, comprising a group of rollers positioned in sequence and configured for the implementation of film pre-stretching, and a stage of film winding on a roll by a winding unit of the film on a roll, which contains a film winding roller and a winding idler of the film on a roll pressed against it, during the stage of winding of the film on a roll the winding idler of the film on a roll is pressed in a pulsed way against the film winding roller.

The claimed technical result in the part of the device is achieved due to the fact that the machine for producing rolls of pre-stretched film contains a pre-stretching unit of the film, comprising a group of rollers located in sequence configured for the implementation of film pre-stretching, and a winding unit of the film on a roll, which contains a film winding roller and a winding idler of the film on a roll pressed against it, the winding idler of the film on a roll is made with possibility of pulsed pressing against the film winding roller.

Variants of improvement of the basic technical solution are possible, which consist in the fact that parameters of the pulsed pressing are chosen depending on the required parameters of the roll; the winding idler of the film on a roll is fixed between two levers controlled by pneumatic cylinders, or hydraulic cylinders, or a synchronous or linear electric motor.

### Positive effects of the invention

Thus, with the claimed group of inventions, it is possible to significantly simplify the method and the machine for producing rolls of pre-stretched film, since the weakening of the film is implemented in one stage due to a smaller number of elements (instead of six drive rollers in the prototype, only four are used here), there is no need to monitor and control the speed of the film, since the speed of the film does not change during the rewinding process, and it is also possible to use asynchronous motors. It should be noted that the winding unit is an integral part of any rewinding machine, however, in the claimed solution, it has a new function due to changing of its operating mode, which allows to weaken the winding film with the specified parameters. Thus, the functionality of the whole machine has increased without adding new elements.

### Brief description of drawings

The spirit of the claimed group of inventions will become apparent from figures and the following description.
**Figure 1**

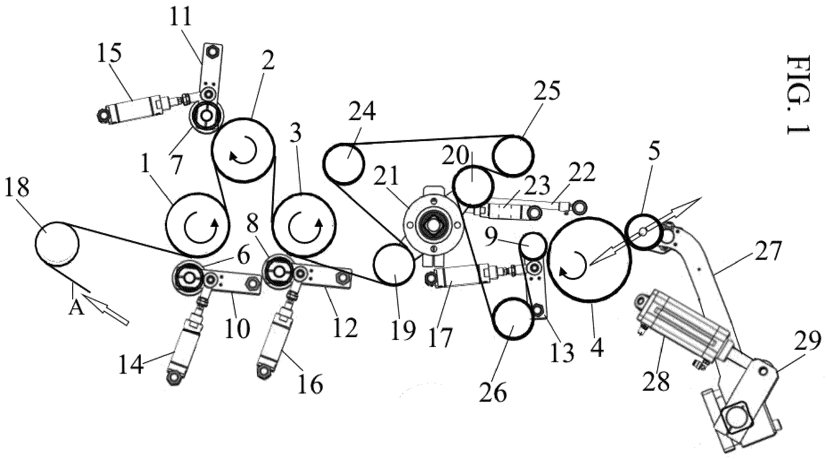

   [Fig. 1] represents the structure of the machine.
**Figure 2**

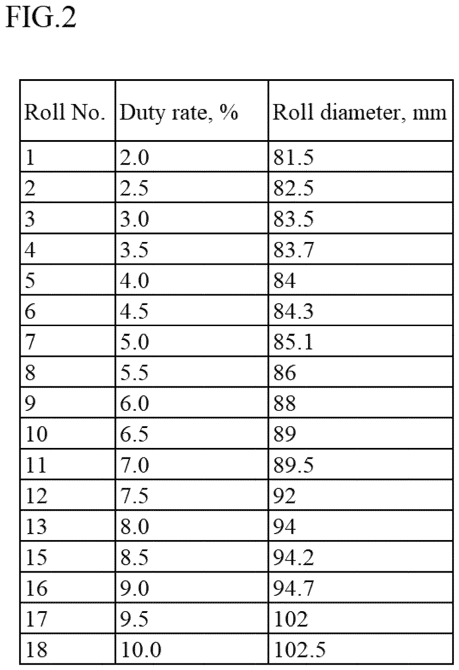

   [Fig. 2] represents results of the experiment carried out.
**Figure 3**

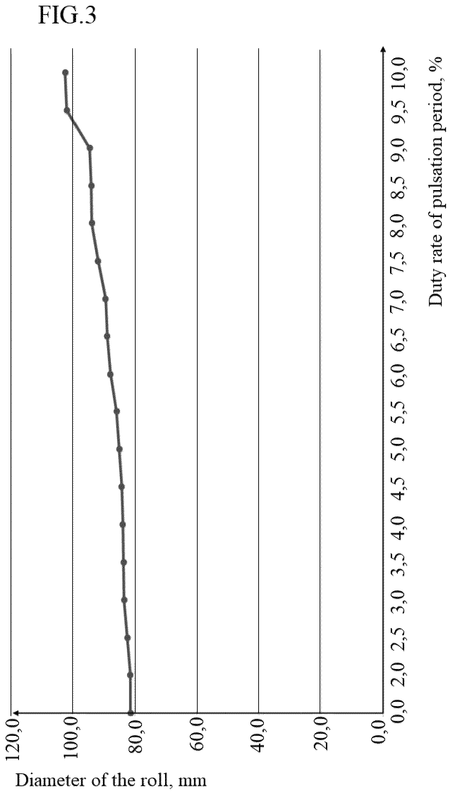

   [Fig. 3] represents results of the experiment carried out.

### Description of embodiments

A machine for producing rolls of pre-stretched film (Fig. 1) contains a pre-stretching unit of the film, comprising a group of rollers 1, 2, 3 located in sequence configured for the implementation of film pre-stretching, and a winding unit of the film on a roll, which contains a film winding roller 4 and a winding idler 5 of the film on a roll pressed against it, the winding idler 5 of the film on a roll is made with possibility of pulsed pressing against the film winding roller 4.

The stretching of the film is effected in two stages: first between rollers 1 and 2, and then between rollers 2 and 3. Roller 3 rotational speed is greater than roller 2 rotational speed, and roller 2 rotational speed is greater than roller 1 rotational speed. Rollers 1, 2, 3 has a specific coating which prevents slipping of the film on the roller surface. Thus, by means of controlled increase of rotational speeds of rollers 1, 2, 3 the film in the unit is stretched in the stream.

Rotation direction of drive rollers 1, 2, 3, 4 in Fig. 1 is schematically shown with circular arrows. At least one nip idler 6-9 contacts respectively each drive roller 1-4 and is provided with two levers 10-13 interacting with at least one pneumatic cylinder 14-17.

Upstream of the pre-stretching unit of the film at least one guide idler 18 can be positioned.

Downstream of the pre-stretching unit a web tension control unit is positioned, which includes guide idlers 19 and 20 positioned on the axis 21 and made with the possibility of joint rotation relative to it, an electric sensor 22 (e. g., an encoder) for the control of the position of the idlers 19, 20, and a pneumatic cylinder 23 for setting a required position of the idlers 19, 20. Along the trajectory of the film web (A) near the web tension control unit there can be positioned guide idlers 24 and 25.

The number of guide idlers in the device is determined by the structure of the machine and the required trajectory of the film web (A) stream.

Downstream of the web tension control unit and at least one guide idler 26, a winding unit of the film on a roll is positioned. The pulsed pressing can be implemented by different methods.

The winding idler 5 of the film on the roll can be fixed between two levers 27 (only one lever is shown in the figure), controlled by a drive 28 through a lever 29.

The drive 28 can be implemented by using two cylinders or hydraulic cylinders; by using a synchronous motor (with Hall sensors) with transformation of the rotary motion into the linear motion by means of the following transmissions: screw-sliding nut; ball screw; gear-rack; belt transmission; using a linear electric motor. The variants listed above do not exclude any other drive mechanism for control of the levers 27.

Parameters of the pulsed pressing are chosen depending on predefined parameters of the roll. Parameters of the roll include the thickness of the original and wound film, extension ratio, winding density (resilience), depending on the quantity of the air between the layers of the film. Pulsation parameters include: a pulsation frequency and a duty rate of the pulsation period, regulating the deviation distance of the winding idler 5 from the roller 4.

Said machine implements a method for producing rolls of pre-stretched film, which contains a stage of pre-stretching of the film by pre-stretching unit of the film, comprising a group of rollers 1, 2, 3 positioned in sequence and configured for the implementation of film pre-stretching, and a stage of film winding on a roll by the winding unit of the film on a roll, which contains the film winding roller 4 and the winding idler 5 of the film on a roll pressed against it, during the stage of winding of the film on a roll the winding idler 5 of the film on a roll is pressed in a pulsed way against the film winding roller 4.

The claimed device operates as follows. The web (A) of not yet stretched film is transferred by means of the drive roller 1 of the pre-stretching unit of the film through the pre-stretching unit of the film. In the pre-stretching unit of the film the web is stretched sequentially up to a prescribed value from the drive roller 1 with the nip idler 6 pressed against it, through the drive roller 2 with the nip idler 7 pressed against it, to the drive roller 3 with the nip idler 8 pressed against it. Each of the three drive rollers 1-3 has an individually controlled drive from the asynchronous electric motor (not shown in the drawing). Each of the three nip idlers 6-8 is pressed against the rollers 1-3 by pressed air by means of pneumatic cylinders 14-16. Pneumatic cylinders 14-16 transfer their force to the idlers 6-8 through the levers 8-12. The controlled extruding of the film web (A) is provided by a specific coating of drive rollers 1-3, pressing the web to the drive rollers 1-3 by the idlers 6-8 and a preset controlled increase of rotational speed of drive rollers from 1 to 3.

From the pre-stretching unit of the film the film web at a speed equal to the linear speed of the drive roller 3 is transferred into the web tension control unit, in which, during film rewinding process, by the electrical sensor 22 of the position control of the idlers 19, 20 and by the pneumatic cylinder 23 the position of the idlers 19, 20 is adjusted by their rotation on the axis 21 so that the tension of the film web is compensated due to the changing relax of the web.

Further the film web (A) through the guide idler 26 is transferred in the winding unit of the film on a roll. The film winding roller 4 is driven, has an individually controlled drive form an asynchronous electric motor. The web of the stretched film is fed into the winding unit of the film on a roll at a speed equal to the roller 3 speed. Uniform pressing of the web to the roller 4 and a specific coating of the roller 4 minimizes slipping of the film web. The roller 4 linear speed is set equal to the web motion speed at the input of the winding unit. The web is pressed to the roller 4 surface by the nip idler 9 by pressed air by means of the pneumatic cylinder 17. By synchronously operating pneumatic cylinders (in a particular embodiment of the drive 28), the winding idler 5 of the film on a roll fixed in the two levers 27 and freely rotating bushings is pressed against the roller 4. In the winding unit pneumatic system (in a particular embodiment of the drive 28) an electronic pressure regulator (not shown in the drawing) is positioned at the input of the rear cavities of pneumatic cylinders of the drive 28. The rewinder controller program in a given algorithm provides electrical signals to a high-capacity solenoid valve, which sequentially opens and closes the supply of compressed air to the rear cavities of the pneumatic cylinders of the drive 28. At the same time, the controller program, by means of an electronic pressure regulator (not shown in the drawing), controls the compressed air pressure in the rear cavities of the pneumatic cylinders of the drive 28 and, therefore, controls the pressing force of the idler 5 with a roll wound on it to the roller 4. The weakening of the web tension during winding is provided by the pulsed pressing of the roll to the roller 4, when, due to the opening of the high-capacity solenoid valve (not shown in the drawing), the pressure of compressed air in the rear cavities of the pneumatic cylinders of the drive 28 drops in a controlled range, the idler 5 moves away from the roller 4 to a predetermined time interval, the roll with the web being wound comes out of the frictional lock with the roller 4, the speed of the roll decreases, the roll at a moment of time rotates only due to inertia, the web tension in the winding of the roll weakens. When the controller program opens the solenoid valve and the compressed air pressure in the rear cavities of the pneumatic cylinders of the drive 28 rises to a value set by the range of the electronic pressure regulator, the idler 5 is pressed against the roller 4 for a predetermined time interval and the film web is tightened by the rotation of the roller 4.

The drive 28 of the winding unit of the film on a roll and the program of the automatic rewinder controller provide the function of pulsed pressing of the levers 27 with the idler 5 to the roller 4. This function provides a controlled release of the film web tension and thereby ensures that the roll is wound at a controlled density.

The algorithm for changing directions (in the direction of the arrow in Fig. 1) of applying the force of the rods of the pneumatic cylinders of the drive 28, the control of the pressure in the rear rod cavities of the pneumatic cylinders of the drive 28 is provided by the controller program. The controller program controls the web tension in the roll being wound by changing such winding parameters as winding speed, stretch ratio, diameter of the roll being wound.

### Examples

To determine the dependence of the variable parameters of the pulsed pressing of the winding idler 5 of the film on a roll to the film winding roller 4 on parameters of the finished pre-stretched film roll, a test with manufacturing of 10 rolls was carried out. Input data for the test carried out:
- an original roll of 23 µm thick polymer film;
- predefined stretch ratio of the film web is 250%;
- speed of the roll winding is 600 m/min;
- the length of the pre-stretched film web in a roll is 200 m;
- pulsation frequency of pressing/releasing of the roll being wound to the winding roller 4 is 8 Hz.

The variable parameter during the test was the duty rate of the pulsation period. The duty rate was changed sequentially in a range from 2% to 10% at 0.5% pitch (Table in Fig. 2). Physically, the duty rate is a cyclic controlled supply and release of the pressed air pressure in rear rod cavities of the pneumatic cylinders of the drive 28 (Fig. 3). The duty rate in % defines time, during which the roll being wound (winding idler 5 of the film on a roll) is not in the frictional lock with the winding roller 4. The results of the test are represented in the Table and illustrated in the plot (Fig. 3). The graph shows an increase in the diameter of the finished roll with an increase in the duty rate of the pulsation period. In terms of physics, increase of the roll diameter, other conditions being equal, occurs due to weakening of the winding of the web in the roll and to the increase in the quantity of air between the layers of the pre-stretched film web in the roll.

### Industrial applicability

The invention claimed corresponds to the criterion of industrial applicability as it can be implemented using known technical means.

### References

Patent documents 1: Patent 2017 - RU 2622429.

## Claims

1. A method for producing rolls of pre-stretched film contains a stage of pre-stretching of the film by a pre-stretching unit of the film, comprising a group of rollers positioned in sequence and configured for the implementation of film pre-stretching, and a stage of film winding on a roll by a winding unit of the film on a roll, which contains a film winding roller and a winding idler of the film on a roll pressed against it, during the stage of winding of the film on a roll the winding idler of the film on a roll is pressed in a pulsed way against the film winding roller.

2. A machine for producing rolls of pre-stretched film contains a pre-stretching unit of the film, comprising a group of rollers located in sequence configured for the implementation of film pre-stretching, and a winding unit of the film on a roll, which contains a film winding roller and a winding idler of the film on a roll pressed against it, the winding idler of the film on a roll is made with possibility of pulsed pressing against the film winding roller.

3. The machine of claim 2, wherein parameters of the pulsed pressing are chosen depending on predefined parameters of the roll.

4. The machine of claim 2, wherein the winding idler of the film on a roll is fixed between two levers controlled by pneumatic cylinders, or hydraulic cylinders, or a synchronous or linear electric motor.
